# EUROPÄISCHE PATENTSCHRIFT

(11) **EP 3 282 740 B1**
(45) Veröffentlichungstag und Bekanntmachung des Hinweises auf die Patenterteilung: **23.10.2019**
(21) Anmeldenummer: 16184067.3
(22) Anmeldetag: 12.08.2016
(51) Int. Cl.: H04W 24/00, H04W 12/12

(54) **BANDWÄCHTER FÜR EIN FUNKKOMMUNIKATIONSSYSTEM**
BAND GUARD FOR A RADIO COMMUNICATION SYSTEM
DISPOSITIF DE SURVEILLANCE DE BANDE POUR UN SYSTÈME DE RADIOCOMMUNICATION

(43) Veröffentlichungstag der Anmeldung: 14.02.2018
(73) Patentinhaber: KUNBUS GmbH, 73770 Denkendorf (DE)
(72) Erfinder: SCHOLL, Gerd, 22393 Hamburg (DE); HEYNICKE, Ralf, 23909 Ratzeburg (DE); KRUSH, Dmytro, 22043 Hamburg (DE); HORNUNG, Rainer, 72270 Reutlingen (DE); SOLZBACHER, Thomas, 27404 Zeven (DE)
(74) Vertreter: Schäperklaus, Jochen

(56) Entgegenhaltungen:
- EP-A1- 3 029 973
- WO-A1-95/08246

## Beschreibung

Die Erfindung betrifft einen Bandwächter zur Erkennung von Störern in einem Funkkommunikationssystem, insbesondere in einem drahtlosen Sensor-Aktor-Netzwerk im industriellen Umfeld, ein Funkkommunikationssystem sowie ein Steuerungssystem.

### Stand der Technik

In verteilten industriellen Steuerungssystemen werden als physisches Medium für die Kommunikation mit den Sensoren und Aktoren zunehmend Funkkommunikationssysteme eingesetzt. So kommunizieren beispielsweise in der Fertigungsautomatisierung oder Prozessautomatisierung eine oder mehrere zentrale Basisstationen mit einer Vielzahl weiterer Teilnehmer. Derartige Netzwerke sind beispielsweise aus der DE 10 2009 054 527 A1 und aus der DE 10 2009 046 503 A1 bekannt.

Die Steuerungsvorgänge sind in der Regel zeitkritisch, d.h., es ist eine bestimmte Latenzzeit unbedingt einzuhalten, da ansonsten unmittelbar Produktionsausfälle oder auch Schäden an Anlagenteilen drohen. In drahtgebundenen Netzwerken nach dem IO-Link-Standard müssen beispielsweise zwischen einer zentralen Basisstation und 100 weiteren Teilnehmern innerhalb einer garantierten Latenzzeit von 10 ms zyklische Prozessdaten ausgetauscht werden. Die Wahrscheinlichkeit dafür, dass 10 ms überschritten werden, darf nicht größer sein als 10⁻⁹. Die gleiche Vorgabe gilt für drahtlose Sensor-Aktor-Netzwerke im industriellen Umfeld.

Da der Funkkanal zeitvariant und frequenzselektiv ist, kann es immer wieder vorkommen, dass eine einzelne Frequenz kurzzeitig nicht benutzbar ist. Daher ist jedem Teilnehmer ein Hopping-Algorithmus zugewiesen, nach dem er in schneller Folge die benutzte Frequenz wechselt. Eine Störung auf einer Frequenz wirkt sich dann nur bis zum nächsten Frequenzwechsel aus. Jeder Teilnehmer darf das Spektrum nur im Rahmen der ihm zugewiesenen Frequenzen, Zeiten und Sendeleistungen belegen (Koexistenz-Management).

Problematisch ist in diesem Zusammenhang, dass Funkkommunikationssysteme für kritische Anwendungen sich aus praktischen und wirtschaftlichen Gründen vielfach die genutzten Frequenzbänder mit einer Vielzahl weiterer Funkanwendungen teilen müssen. So wird etwa das besonders bevorzugte 2,4-GHz-ISM-Band zugleich noch für WLAN, Bluetooth und andere Kurzstrecken-Funkanwendungen genutzt. Zugleich arbeiten in diesem Band auch Mikrowellenherde und andere Systeme, die zur Wärmeeinbringung um mehrere Größenordnungen höhere Leistungen verwenden als für Kurzstrecken-Funkanwendungen üblich. Kleine Hochfrequenz-Leckagen in diesen Systemen können die Kommunikation empfindlich stören.

Aus der WO 95/08246 A1 ist ein Funkkommunikationssystem bekannt, bei dem für jeden Funkkanal das mittlere Interferenzniveau berechnet wird, um dadurch einen gestörten Funkkanal zu detektieren.

### Aufgabe und Lösung

Es ist daher die Aufgabe der Erfindung, in Funkkommunikationssystemen für kritische Anwendungen Mittel bereitzustellen, mit denen Störungen frühzeitig erkannt und ihre Auswirkungen minimiert werden können.

Diese Aufgabe wird erfindungsgemäß gelöst durch einen Bandwächter gemäß Hauptanspruch, ein Funkkommunikationssystem gemäß Nebenanspruch sowie ein Steuerungssystem gemäß weiterem Nebenanspruch. Weitere vorteilhafte Ausgestaltungen ergeben sich aus den darauf rückbezogenen Unteransprüchen.

### Gegenstand der Erfindung

Im Rahmen der Erfindung wurde ein Bandwächter für ein Funkkommunikationssystem, in dem jedem Teilnehmer eine feste Abfolge zu benutzender Frequenzen zugeteilt ist, entwickelt. Die feste Abfolge kann insbesondere zyklisch sein bzw. zyklisch wiederholt werden. Der Bandwächter umfasst Messmittel zur Ermittlung einer Zeit-Frequenz-Darstellung der Nutzung mindestens eines Frequenzbandes des Funkkommunikationssystems. Aufgelöst nach Zeit und Frequenz kann insbesondere die empfangene Signalstärke aufgezeichnet werden. Prinzipiell genügt es jedoch bereits, binär aufzuzeichnen, ob eine Frequenz zu einem Zeitpunkt genutzt wird (1) oder nicht (0).

Erfindungsgemäß umfasst der Bandwächter zusätzlich einen Speicher für die festen Abfolgen sowie eine Auswerteeinheit. Diese Auswerteeinheit ist dazu ausgebildet, die Zeit-Frequenz-Darstellung in einen mit den festen Abfolgen plausiblen Anteil und in einen zu den festen Abfolgen widersprüchlichen Anteil zu zerlegen. Der Bandwächter funktioniert also als MAC-Profiler (MAC = Media Access Control, Zugriffskontrolle auf das physische Medium Funkkanal).

Es wurde erkannt, dass der Vergleich der tatsächlichen Frequenznutzung mit den den einzelnen Teilnehmern zugewiesenen festen Abfolgen insbesondere in einem Funkkommunikationssystem mit vielen Teilnehmern ein verlässliches und zugleich schnell prüfbares Kriterium zur Erkennung von Störungen ist. Seitens des europäischen Instituts für Telekommunikationsnormen, ETSI, ist für parallel betriebene Systeme vorgeschrieben, dass diese nicht aktiv auf eine gemeinsame Zeitbasis synchronisiert sein dürfen. Auch innerhalb eines Systems können die Zeitbasen der Teilnehmer auseinanderdriften. Die Abfolge der genutzten Frequenzen bleibt jedoch für jeden Teilnehmer charakteristisch und leicht wiederzuerkennen, so wie eine Melodie in weiten Grenzen unabhängig vom Zeitmaß, in dem sie gespielt wird, und vom Zeitpunkt des Einsatzes wiedererkannt wird.

Nach dem bisherigen Stand der Technik wurde das Frequenzspektrum von den Teilnehmern des Funkkommunikationssystems allenfalls rudimentär analysiert, um vor dem Senden jeweils feststellen zu können, ob die Frequenz frei ist. Der Bandwächter analysiert die Frequenznutzung typischerweise auf einer deutlich schnelleren Zeitskala.

Die Teilnehmer sind im Verhältnis zueinander in der Regel inkohärente Quellen. Es gilt das Superpositionsprinzip, wonach sich die Signale der Teilnehmer linear überlagern. Beispielsweise kann der mit den festen Abfolgen der einzelnen Teilnehmer plausible Anteil der Zeit-Frequenz-Darstellung als gewichtete lineare Summe der Beiträge der einzelnen Teilnehmer modelliert werden. Dabei können beispielsweise die Gewichte sowie ein zeitlicher Versatz zwischen den Teilnehmern auf Grund des Auseinanderdriftens der Zeitbasen als Fitparameter auf eine bestmögliche Übereinstimmung hin optimiert werden. Die Differenz zwischen der tatsächlichen Zeit-Frequenz-Darstellung und dem plausiblen Anteil kann dann als der zu den festen Abfolgen widersprüchliche Anteil gewertet werden. Die in dem Speicher abgelegten festen Abfolgen geben dem Bandwächter also an, welche Frequenzen zu welchen Zeiten in der nächsten Zeit (ms- bis s-Bereich) nominell belegt werden.

In Netzwerken, in denen es eine feste Synchronisation der Teilnehmer untereinander auf eine gemeinsame Zeitbasis gibt, kann die erwartete Frequenznutzung vereinfacht als Matrix abgespeichert sein, deren Spalten diskrete Frequenzkanäle bezeichnen und deren Zeilen verschiedene Zeitpunkte, zu denen die Frequenznutzung ermittelt wird, bezeichnen. Die Matrixeinträge können dann beispielsweise die erwarteten Signalpegel bezeichnen. Es kann dann zu jedem Zeitpunkt eine Zeile der Matrix daraufhin analysiert werden, ob die erwarteten Signalpegel den beobachteten Signalpegeln entsprechen. Ist dies der Fall, ist die Frequenznutzung komplett mit den festen Abfolgen, die den einzelnen Teilnehmern zugewiesen sind, plausibel. Andernfalls gibt es im System mindestens einen Fehler bzw. eine Störquelle.

Die Kenntnis des widersprüchlichen Anteils kann in vielfältiger Weise genutzt werden, um die Störung zu bekämpfen und/oder ihre Auswirkung abzumildern. Ist beispielsweise eine bestimmte Frequenz betroffen, so kann die von einem oder mehreren Teilnehmern genutzte Abfolge von Frequenzen dahingehend angepasst werden, dass die gestörte Frequenz ausgespart wird. Alternativ oder auch in Kombination hierzu kann der widersprüchliche Anteil weiter ausgewertet werden, um die Störquelle ausfindig zu machen und letztendlich abzustellen. Weiterhin kann die Anlage in einen Sicherheitszustand versetzt werden, in dem die Auswirkung einer Nichteinhaltung der vorgegebenen Latenzzeit minimiert wird.

Vorteilhaft weist der Bandwächter eine Kommunikationseinheit auf, mit der er als Teilnehmer in das Funkkommunikationssystem einbindbar ist. Er kann dann auf dem gleichen Wege parametrisiert und konfiguriert werden sowie seine Mess- und Auswertungsergebnisse übermitteln wie die anderen Sensoren im Funkkommunikationssystem. Hierfür können etwa beliebige Engineering-Tools der klassischen Automatisierungstechnik verwendet werden. Beispielsweise können auf diesem Wege die festen Abfolgen in den Speicher geladen werden. Der Bandwächter kann auf diesem Wege beispielsweise auch eine Positivliste (Whitelist) von durch das Funkkommunikationssystem tatsächlich genutzten Teilbereichen und/oder eine Negativliste (Blacklist) von durch das Funkkommunikationssystem nicht genutzten Teilbereichen des Frequenzbandes erhalten. So kann beispielsweise bei parallelem Betrieb eines drahtlosen industriellen Sensor-Aktor-Netzes mit mehreren WLAN-Netzen das drahtlose Sensor-Aktor-Netz so konfiguriert sein, dass es nur in den Zwischenräumen zwischen den von den WLAN-Netzen genutzten Bereichen arbeitet.

Insbesondere kann ein Bandwächter, der zumindest zeitweise in dem Funkkommunikationssystem als Teilnehmer eingebunden ist, von diesem System automatisch die festen Abfolgen der von den einzelnen Teilnehmern zu nutzenden Frequenzen und/oder Sendezeitpunkte mitgeteilt bekommen. Zu diesem Zweck kann der Bandwächter insbesondere auch in mehreren derartigen Systemen jeweils als Teilnehmer eingebunden werden. Auf diese Weise erhält der Bandwächter alle Informationen über den autorisierten Medienzugriff in seiner Umgebung.

In einer weiteren vorteilhaften Ausgestaltung der Erfindung weist der Bandwächter eine Kommunikationseinheit auf, die mit einem vom Funkkommunikationssystem verschiedenen drahtlosen oder drahtgebundenen Kommunikationsnetz verbindbar ist. Auf diese Weise kann der Bandwächter auch dann noch Detailinformationen über die Störung übermitteln, wenn diese bereits so massiv ist, dass der Bandwächter für diese Übermittlung das eigentliche Funkkommunikationssystem schon nicht mehr nutzen kann.

Der Bandwächter kann beispielsweise in ein Gerät, das bereits Teilnehmer des Funkkommunikationssystems ist und eine andere Funktion erfüllt, integriert sein. Beispielsweise kann er als zusätzliche Funktionalität in einer Basisstation oder in einem Sensor- oder Aktormodul integriert sein. Vorteilhaft ist der Bandwächter jedoch ein eigenständiges Gerät. Dann kann er insbesondere an einem Ort platziert werden, wo er proaktiv vor Störungen warnt, bevor die eigentlichen Teilnehmer des Funkkommunikationssystems durch diese Störungen merkliche Einbußen erleiden.

Der Bandwächter kann beispielsweise durch Austausch der Firmware aus einem Sensor- oder Aktormodul oder sonstigen Teilnehmergerät, welches zumindest über eine Basis-Hardwareausstattung zur Ermittlung der Zeit-Frequenz-Darstellung des Frequenzbandes verfügt, hergestellt werden. Auf diese Weise können beispielsweise veraltete oder defekte Geräte, die ihre primäre Funktion nicht mehr erfüllen können, zweitverwertet werden. Vorteilhaft ist der Bandwächter jedoch hardwaremäßig speziell auf diese Aufgabe optimiert.

Die Messmittel umfassen in einer besonders vorteilhaften Ausgestaltung der Erfindung eine Mehrzahl von simultan arbeitenden Empfängern, die zu einem vorgegebenen Zeitpunkt jeweils auf eine feste Frequenz und/oder auf ein festes Teilfrequenzband innerhalb des Frequenzbandes sensitiv sind. Auf diese Weise lässt sich die Zeit-Frequenz-Darstellung mit einer besonders hohen Zeitauflösung ermitteln. So kann beispielsweise die aktuelle Nutzung des für drahtlose industrielle Sensor-Aktor-Netzwerke interessanten Frequenzbereichs von 2400 MHz bis 2480 MHz mit 80 Empfängern, die jeweils auf ein Teilfrequenzband von 1 MHz sensitiv sind, in weniger als 45 µs erfasst werden. Derartige Messmittel sind schnell genug, um beispielsweise Störungen durch Bluetooth-Geräte zu erfassen, die im Scanmodus sporadisch kurze Pulse von 64 µs Dauer über ein breites Frequenzspektrum verteilen. Auch WLAN-Burst-Signale sind sporadische Störungen, die nur erfasst werden können, wenn die Abtastrate des Spektrumanalysators hinreichend schnell ist.

Auf einem Sweep-Verfahren beruhende Spektrumanalysatoren, die immer nur auf einer Frequenz zur Zeit empfangen, benötigen hingegen einen Zeitraum von einigen Millisekunden, um etwa das 2,4-GHz-ISM-Band zu scannen. Erst nach Ablauf dieses Zeitraums kann eine Aussage über die aktuelle Belegung des Frequenzbereichs getroffen werden. Sendet der Störer zeitlich getaktet und/oder handelt es sich um ein frequenzagiles System, ist er nur sichtbar, wenn der Spektrumanalysator zufällig zum gleichen Zeitpunkt auf der Frequenz misst, auf der der Störer gerade sendet. Ein frequenzagiler Störer lässt sich also mit einem relativ langsam sweependen Spektrumanalysator nur unzureichend bzw. mit hohem Zeitaufwand aufklären.

Mit sogenannten Echtzeit-Spektrumanalysatoren lässt sich das gesamte Frequenzband gleichzeitig erfassen bzw. analysieren. Diese Analysatoren sind jedoch extrem teuer und können das Frequenzband aufgrund des hohen Rechenaufwandes für die Datenanalyse nur mit erheblichen zeitlichen Lücken beobachten. Weiterhin verfügt der HF-Eingangszweig über eine Bandbreite, die mindestens so groß ist wie der zu untersuchende Empfangsbereich. Dies hat zur Folge, dass der Sender mit dem stärksten Empfangspegel den Dynamikbereich des gesamten Analysators bestimmt. Schwache Signale können daher unter Umständen nicht zeitgleich mit starken Signalen gemessen werden. Die gemäß der besagten vorteilhaften Ausgestaltung der Erfindung aus mehreren unabhängigen Empfängern zusammengesetzten Messmittel bieten demgegenüber den Vorteil, dass jeder der unabhängigen Empfänger seinen unabhängig wählbaren Dynamikbereich hat.

In einer weiteren besonders vorteilhaften Ausgestaltung der Erfindung ist ein zusätzlicher Speicher für die am Ort des Bandwächters zu erwartenden Signaleigenschaften der Teilnehmer vorgesehen. Diese Signaleigenschaften können insbesondere die Signalstärke umfassen. Die Auswerteeinheit ist dazu ausgebildet, die Signaleigenschaften einer Frequenznutzung, die mit der festen Abfolge eines Teilnehmers plausibel ist, mit den zu erwartenden Signaleigenschaften des vom Teilnehmer empfangenen Signals zu vergleichen.

Auf diese Weise können beispielsweise Bedienungsfehler bzw. Fehlkonfigurationen dahingehend, dass ein Teilnehmer im System doppelt vorhanden ist, erkannt werden. Derartige Fehler können beispielsweise entstehen, wenn ein Gerät an einer Stelle durch ein neues ersetzt wird und das alte Gerät an anderer Stelle weiterverwendet wird, ohne zuvor dessen Netzwerkkonfiguration zu löschen.

Besonders vorteilhaft ist die Auswerteeinheit dazu ausgebildet, eine Abweichung der Signaleigenschaften von den zu erwartenden Signaleigenschaften als Einbruchsversuch in das Funkkommunikationssystem durch Vorspiegeln der Identität eines Teilnehmers zu erkennen. Da die geforderten Latenzzeiten sehr kurz sind und die Teilnehmergeräte zugleich meist nur über geringe Rechenleistung verfügen, ist es häufig nicht praktikabel, die Kommunikation in dem Funkkommunikationssystem nach dem gleichen hohen Standard kryptographisch abzusichern wie etwa in einem WLAN. Bei hinreichend freier Sicht auf den Standort ist, beispielsweise unter Verwendung von Richtantennen, ein Einbruchsversuch auf größere Entfernungen denkbar. Ähnliche Angriffe mit Funkreichweitenverlängerern gibt es bereits auf Funkschlüssel von PKW.

Die den einzelnen Teilnehmern zugeteilten festen Abfolgen der Frequenznutzung und/oder die zu erwartenden Signaleigenschaften können den jeweiligen Speichern als A-priori-Wissen durch die Kommunikationseinheit zugeführt werden. Die festen Abfolgen sind zentral festgelegt und sollten daher bekannt sein. Die an einem beliebigen Ort innerhalb des Systems zu erwartenden Signaleigenschaften sind hingegen schwierig im Voraus berechenbar, zumal die Funkausbreitung etwa in einer industriellen Fertigungsanlage mit Unwägbarkeiten infolge von Abschattungen und Reflexionen behaftet ist. Daher ist in einer besonders vorteilhaften Ausgestaltung der Erfindung die Auswerteeinheit in einen Lernmodus schaltbar, in dem sie aus der Zeit-Frequenz-Darstellung die festen Abfolgen und/oder die zu erwartenden Signaleigenschaften ermittelt. Es kann also ohne weiteres Zutun des Anwenders der störungsfreie Normalzustand automatisch erfasst und in den Speichern des Bandwächters hinterlegt werden, so dass spätere Veränderungen vom Bandwächter registriert werden können.

Ein solcher Lernmodus kann beispielsweise zur zeitlichen Synchronisation auf ein oder mehrere Funkkommunikationssysteme verwendet werden, also zur Gewinnung der Information, wann eine bekannte feste Abfolge von Aussendungen auf verschiedenen Frequenzen genau beginnen soll. Dann sind dem Bandwächter zu jeder Zeit die autorisierten Sendefrequenzen bekannt.

In einer besonders vorteilhaften Ausgestaltung der Erfindung sind die Messmittel dazu ausgebildet, während mindestens einer mindestens einem Teilnehmer seitens des Funknetzwerks zugewiesenen Sendepause eine Zeit-Frequenz-Darstellung aufzunehmen. Ist beispielsweise der Bandwächter sehr nahe an einem Teilnehmergerät angeordnet, welches seinerseits vergleichsweise weit von der Basisstation entfernt ist, so wird dieses Teilnehmergerät ein recht starkes Signal aussenden, um die Basisstation zu erreichen. Am Ort des Bandwächters wird dieses Signal deutlich stärker sein als die Signale von anderen, weiter entfernten Teilnehmern und kann diese teilweise überdecken. Wenn das starke Signal pausiert, können die schwächeren Signale besser aufgelöst werden. Insbesondere können die Messmittel dazu ausgebildet sein, während einer im gesamten Funkkommunikationssystem gültigen Sendepause eine Zeit-Frequenz-Darstellung aufzunehmen. Eine Frequenznutzung in dieser Zeit steht dann unmittelbar als zu den festen Abfolgen aller Teilnehmer widersprüchlich, also als Störung, fest. Je früher die Störung erkannt wird, desto mehr Zeit bleibt für Gegenmaßnahmen, um die Störung entweder ursächlich zu beseitigen oder zumindest ihre Folgen abzumildern.

In einer weiteren besonders vorteilhaften Ausgestaltung der Erfindung ist die Auswerteeinheit dazu ausgebildet, eine Frequenznutzung als mit dem IO-Link-Standard, mit einem WLAN-Standard und/oder mit einem Bluetooth-Standard konforme Frequenznutzung zu identifizieren. Dies sind die drei hauptsächlichen Kurzstrecken-Funkanwendungen, die im 2,4-GHz-Band koexistieren. Ist die Art einer störenden Frequenznutzung auf diese Weise eingekreist, wird es wesentlich erleichtert, die Störung letztendlich abzustellen. Das 2,4-GHz-Band ist sehr stark frequentiert, aus drei Gründen aber dennoch in vielen Fällen vorteilhafter als das deutlich leerere 5-GHz-Band:
- die bei gleicher Leistung erzielbare Reichweite ist größer, insbesondere wenn zwischen Sender und Empfänger keine völlig freie Sichtlinie besteht;
- 5-GHz-Funkmodule benötigen derzeit noch um etwa einen Faktor 10 mehr Strom als 2,4-GHz-Funkmodule;
- weite Teile des 5-GHz-Bandes sind Radaranlagen zur primären Nutzung zugewiesen. Andere Funkanlagen haben ihre jeweils genutzte Frequenz periodisch auf Radarsignale abzuhören und den Betrieb ggfs. sofort einzustellen (DFS-Technik).

Die Erfindung bezieht sich auf ein Funkkommunikationssystem, das einen räumlichen Bereich, etwa eine industrielle Fertigungsanlage, versorgt. Erfindungsgemäß ist mindestens ein Bandwächter gemäß der Erfindung in einem Randbereich des versorgten Bereichs und/oder an einem Zugang zum versorgten Bereich angeordnet. Unter einem Randbereich wird insbesondere ein Bereich verstanden, dessen Entfernung von der zentralen Basisstation mindestens 75 % der Entfernung des von der Basisstation am weitesten entfernten Teilnehmers von der Basisstation beträgt. Ein Zugang kann insbesondere eine Tür sein, durch die ein das Funkkommunikationssystem beherbergender abgeschlossener Raum, wie beispielsweise eine Halle, betreten werden kann.

Es wurde erkannt, dass die meisten Störungen in Funkkommunikationssystemen von Industrieanlagen durch von außen eingebrachte Störquellen entstehen, etwa durch mitgebrachte WLAN- oder Bluetooth-fähige Geräte, die sich automatisch um einen Verbindungsaufbau bemühen. Durch die proaktive Platzierung des Bandwächters im Randbereich bzw. am Zugang kann eine derartige Störquelle frühzeitig erkannt werden. Beispielsweise kann ein Alarm ausgelöst und der Person, die die Störquelle mit sich führt, der weitere Zugang zu einem Zeitpunkt verwehrt werden, zu dem noch kein oder nur wenige Teilnehmer von der Störung betroffen sind. Ist die Störquelle hingegen bereits in die Nähe der zentralen Basisstation vorgedrungen, kann sie schlimmstenfalls das Signal der meisten anderen Teilnehmer überdecken, so dass das komplette Netzwerk ausfällt.

Alternativ oder auch in Kombination hierzu ist es somit auch vorteilhaft, einen Bandwächter nahe einer zentralen Basisstation des Funkkommunikationssystems anzuordnen, da eine an diesem Ort wahrnehmbare Störung sich mit hoher Wahrscheinlichkeit bald auf das ganze Netzwerk auswirken wird. Der Bandwächter an diesem Ort "hört" im Wesentlichen dieselben Signale wie die Basisstation, d.h., er hat ein genaues Abbild der von der Basisstation wahrgenommenen Frequenznutzung. Er interpretiert die Signale jedoch nicht logisch im Sinne des im Funkkommunikationssystem verwendeten Protokolls, sondern analysiert lediglich die aus den Signalen möglicherweise resultierenden negativen Effekte auf den Regelbetrieb.

Die Erfindung bezieht sich auch auf ein verteiltes industrielles Steuerungssystem mit einem Funkkommunikationssystem, welches mindestens einen Bandwächter gemäß der Erfindung umfasst. Erfindungsgemäß ist mindestens ein Steuergerät des Steuerungssystems mit dem Bandwächter gekoppelt und dazu ausgebildet, ausgelöst durch die Erkennung durch den Bandwächter eines zur geplanten Frequenznutzung im Funkkommunikationssystem widersprüchlichen Anteils der Frequenznutzung das Steuerungssystem in einen Sicherheitszustand zu versetzen, in dem die Auswirkung einer Störung des Funkkommunikationssystems vermindert ist. Das Steuergerät kann beispielsweise eine speicherprogrammierbare Steuerung (SPS) sein.

Es wurde erkannt, dass sich eine Störung des Funkkommunikationssystems mitunter deutlich schneller zu Störungen des gesteuerten Prozesses und/oder zu Schäden an Anlagenteilen auswirken kann als sich die Störung ursächlich beheben lässt. Indem das Steuerungssystem in einen Sicherheitszustand versetzt wird, kann diese Beeinträchtigung minimiert und insbesondere ein dauerhafter Schaden vermieden werden.

Beispielsweise kann in dem Sicherheitszustand die maximal tolerierbare Latenzzeit bei der Funkübertragung im Funkkommunikationssystem erhöht sein. Hierzu kann vorteilhaft beispielsweise eine Arbeitsgeschwindigkeit eines von dem Steuerungssystem gesteuerten Geräts gegenüber dem Normalbetrieb vermindert sein. Arbeitet etwa eine Abfüllanlage für Getränke während der Störung mit reduziertem Durchsatz, ist dies ein kleineres Übel, als nach einer Kollision von Flaschen die gesamte Anlage nach den Glassplittern absuchen zu müssen.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Bandwächters 1; Einbettung desselben in ein Funkkommunikationssystem 100 und ein Steuersystem 300.
Figur 2: Ausführungsbeispiel eines schnellen Spektrumanalysators 2 aus mehreren simultan arbeitenden Empfängern 21a-21h.
Figur 3: Ausführungsbeispiel einer Analyse einer Zeit-Frequenz-Darstellung 20.
Figur 4: Anordnung von Bandwächtern 1a-1d zur frühestmöglichen Erkennung von Störern 9a, 9b.
Figur 5: Gemeinsamer Bandwächter 1 für zwei Funkkommunikationssysteme 100, 120.

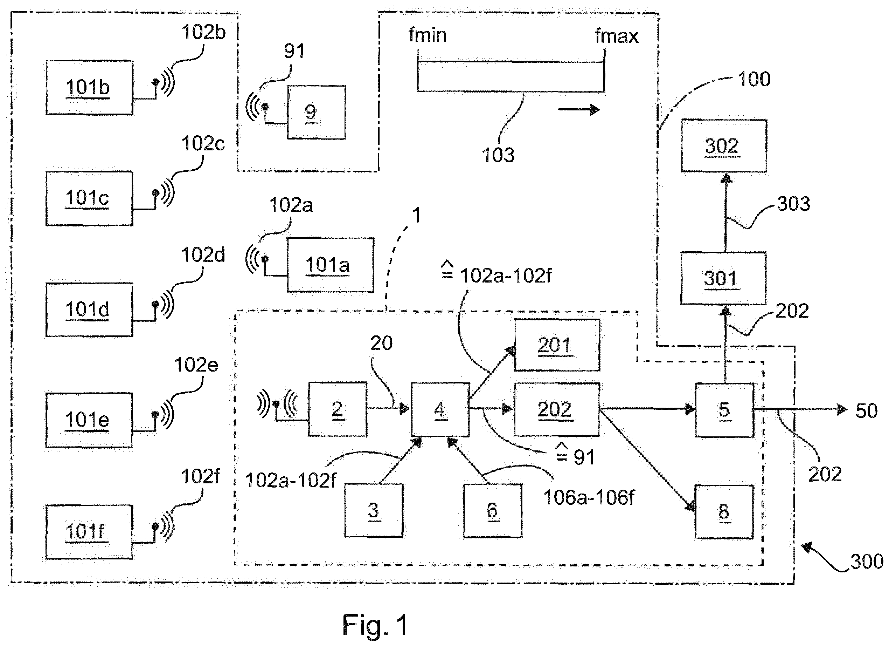

Figur 1 zeigt ein Ausführungsbeispiel eines Bandwächters 1. Der Bandwächter 1 umfasst Messmittel 2, die eine Zeit-Frequenz-Darstellung 20 der Nutzung des vom Funkkommunikationssystem 100 verwendeten Frequenzbandes 103 zwischen den Frequenzen fₘᵢₙ und fₘₐₓ anfertigen. Diese Zeit-Frequenz-Darstellung 20 wird der Auswerteeinheit 4 zugeführt, die zugleich die festen Abfolgen 102a-102f der von den Teilnehmern 101a-101f zu benutzenden Frequenzen f aus einem Speicher 3 und die am Ort des Bandwächters 1 zu erwartenden Signalstärken 106a-106f der Teilnehmer 101a-101f aus einem Speicher 6 abruft. Die A-priori-Information 102a-102f, 106a-106f aus den Speichern 3 und 6 wird von der Auswerteeinheit 4 verwendet, um die Zeit-Frequenz-Darstellung 20 der Frequenznutzung in einen von den Teilnehmern 101a-101f herrührenden, mit deren festen Abfolgen 102a-102f plausiblen, Anteil 201 sowie einen mit diesen festen Abfolgen 102a-102f widersprüchlichen Störanteil 202 zu zerlegen. Insbesondere wird bei dem Vergleich, ob die Signaleigenschaften der Frequenznutzung mit den festen Abfolgen 102a-102f der Teilnehmer 101a-101f plausibel sind, die Signalstärke als Signaleigenschaft herangezogen.

In dem in Figur 1 gezeigten Ausführungsbeispiel ist der erste Teilnehmer 101a die zentrale Basisstation des Funkkommunikationssystems 100. Die Teilnehmer 101b-101f sind Sensor/Aktor-Module. Daneben gibt es noch einen Störer 9, dessen nicht mit dem Funkkommunikationssystem 100 konforme Frequenznutzung dem Muster 91 folgt. Die Auswerteeinheit 4 erkennt durch den Vergleich mit den festen Abfolgen 102a-102f genau diese Frequenznutzung 91 als Störung und ordnet sie dem Störanteil 202 zu.

Der Störanteil 202 wird an der intelligenten Anzeige 8 des Bandwächters 1 angezeigt und zugleich an die Kommunikationseinheit 5 des Bandwächters 1 übermittelt. Diese Kommunikationseinheit 5 übermittelt die Information über den Störanteil 202 zum einen an die speicherprogrammierbare Steuerung (SPS) 301 des Steuerungssystems 300. Zum anderen wird diese Information auch über ein vom Funkkommunikationssystem 100 separates Kommunikationsnetz 50 weitergeleitet.

Die SPS 301 versetzt mit einer Alarmmeldung 303 die von der SPS 301 gesteuerte Maschine 302 in einen Sicherheitszustand, in der die Arbeitsgeschwindigkeit der Maschine 302 vermindert ist und eine größere Latenzzeit im Funkkommunikationssystem 100 tolerabel ist, ohne dass Schäden an der Maschine 302 entstehen. Einige der logisch zum Funkkommunikationssystem 100 gehörigen und daher innerhalb dieses Systems eingezeichneten Sensoren/Aktoren 101b-101f sind physisch an der Maschine 302 angeordnet. Dies ist in Figur 1 aus Gründen der Übersichtlichkeit nicht eingezeichnet.

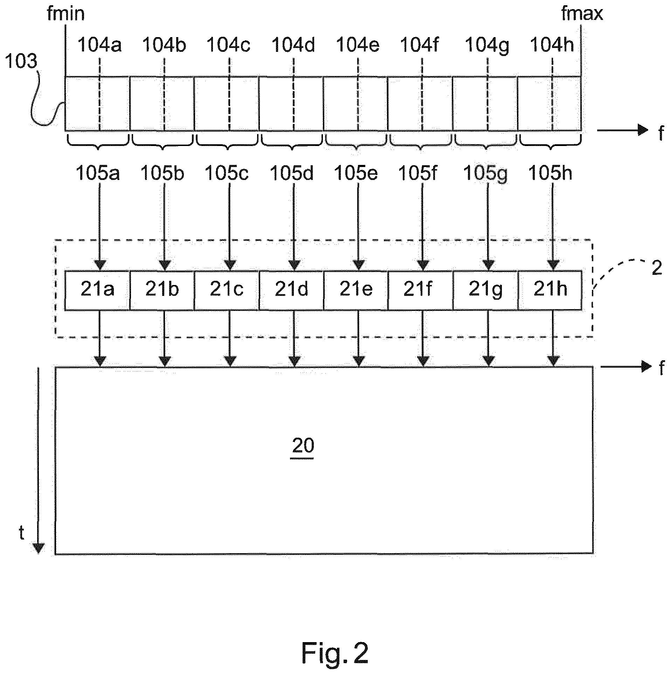

Figur 2 zeigt einen schnellen Spektrumanalysator 2, der aus acht simultan arbeitenden Empfängern 21a-21h besteht. Jeder dieser Empfänger 21a-21h ist auf ein Teilband 105a-105h des Frequenzbandes 103 mit Mittenfrequenz 104a-104h sensitiv. Die Information aus allen Empfängern 21a-21h wird zur zweidimensionalen Darstellung 20 der Frequenznutzung in Frequenz f und Zeit t zusammengesetzt. Jeder Empfänger 21a-21h regelt über eine automatische Verstärkungskontrolle (automatic gain control, AGC) seinen Dynamikbereich unabhängig von den anderen Empfängern. Auf diese Weise kann beispielsweise der Empfänger 21c noch einen schwachen Störer 9 erkennen, während der Empfänger 21a ein starkes Nutzsignal des Teilnehmers 101c empfängt und von diesem beinahe gesättigt wird.

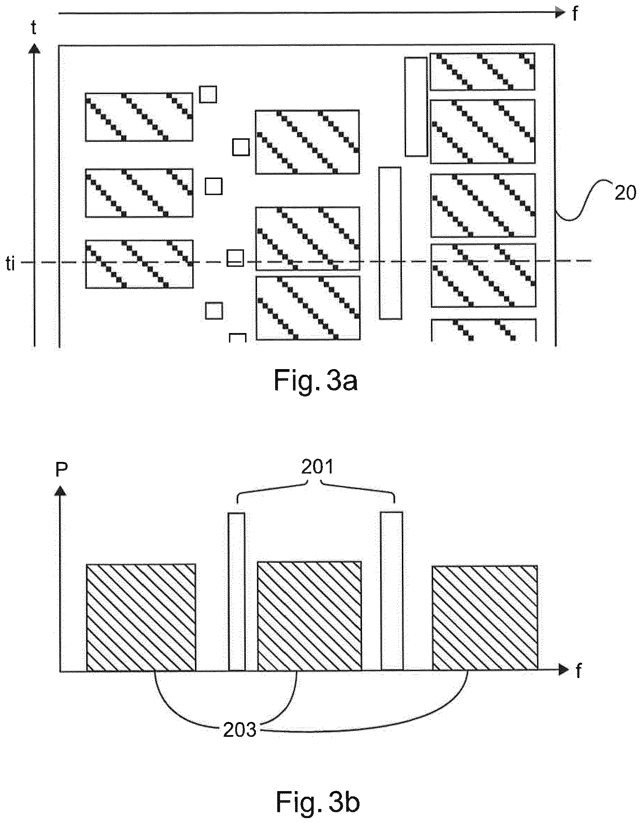

Figur 3 zeigt beispielhaft die in der Auswerteeinheit 4 des Bandwächters 1 ablaufende Analyse der Zeit-Frequenz-Darstellung 20. Figur 3a zeigt beispielhaft einen Ausschnitt der Zeit-Frequenz-Darstellung 20. Die in dieser Darstellung 20 schraffierten Bereiche rühren von drei neben dem Funkkommunikationssystem 100 parallel betriebenen WLAN-Netzen her. Zwischen den Spuren der WLAN-Netze befinden sich die vom Funkkommunikationssystem 100 genutzten Frequenzen f. Die Farbinformation, die die jeweilige Empfangsleistung P angibt, ist in Figur 3a weggelassen.

Figur 3b zeigt einen Schnitt durch die Zeit-Frequenz-Darstellung 20 zum Zeitpunkt ti. Der Betrieb der drei WLAN-Netze war bei der Konzeption des Funkkommunikationssystems 100 eingeplant; daher sind die zugehörigen Frequenzen f im Speicher 3 des Bandwächters 1 als zu ignorierende Frequenznutzung 203 markiert. Die übrigen Ausschläge der Empfangsleistung P sind auf die zwischen den WLAN-Spuren stattfindende Frequenznutzung durch das Funkkommunikationssystem 100 zurückzuführen und werden daher von der Auswerteeinheit 4 als mit den festen Abfolgen 102a-102f der Frequenznutzung, die den Teilnehmern 101a-101f zugeordnet sind, plausibler Anteil 201 der Zeit-Frequenz-Darstellung 20 gewertet.

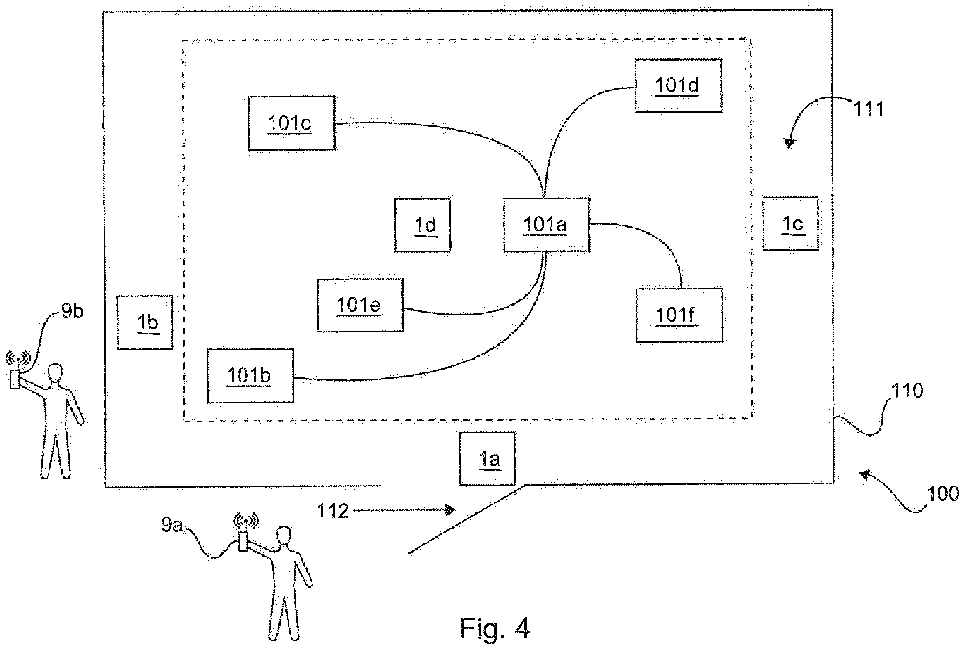

Figur 4 zeigt, wie mehrere Bandwächter 1a-1d sinnvollerweise eingesetzt werden, um Störer 9a, 9b frühzeitig zu erkennen. Das Funkkommunikationssystem 100 versorgt einen Bereich 110 mit Randbereich 111. Es umfasst die Teilnehmer 101a-101f, wobei der Teilnehmer 101a die zentrale Basisstation ist und die Teilnehmer 101b-101f normale Sensor/Aktor-Module sind. Zur Verdeutlichung dieser Master/Slave-Beziehung sind die Teilnehmer 101b-101f über Linien sternförmig mit dem Teilnehmer 101a verbunden.

Der erste Bandwächter 1a ist am Eingang 112 des versorgten Bereichs 110, der hier eine Fertigungszelle ist, angeordnet. Zwei weitere Bandwächter 1b und 1c sind an weiteren Positionen im Randbereich 111 des versorgten Bereichs 110 angeordnet. Ein vierter Bandwächter 1d ist in unmittelbarer Nähe der Basisstation 101a angeordnet.

Nähert sich der Störer 9a dem Eingang 112, so wird der Bandwächter 1a zuerst ansprechen. Wird ein entsprechender Alarm ausgelöst, so kann beispielsweise die Tür 112 verschlossen bleiben oder das Steuerungssystem 300, das das Funkkommunikationssystem 100 beinhaltet, in einen Sicherheitszustand 303 versetzt werden.

Nähert sich der Störer 9b der linken Grenze des versorgten Bereichs 110, so wird analog der Bandwächter 1b zuerst ansprechen. Es ist somit erkennbar, aus welcher Richtung sich ein Störer 9a, 9b nähert. Dies erleichtert es, die Störung ursächlich zu beheben.

Der Bandwächter 1d in unmittelbarer Nähe der Basisstation 101a hat die Funktion, genau das Empfangsspektrum, das die Basisstation 101a wahrnimmt, auf Störungen zu überwachen. Die Basisstation 101a ist insofern ausgezeichnet, als sie für das Funktionieren des Funkkommunikationssystems 100 systemrelevant ist: Ist der Funkempfang am Ort der Basisstation 101a gestört, kann das Netz 100 komplett ausfallen.

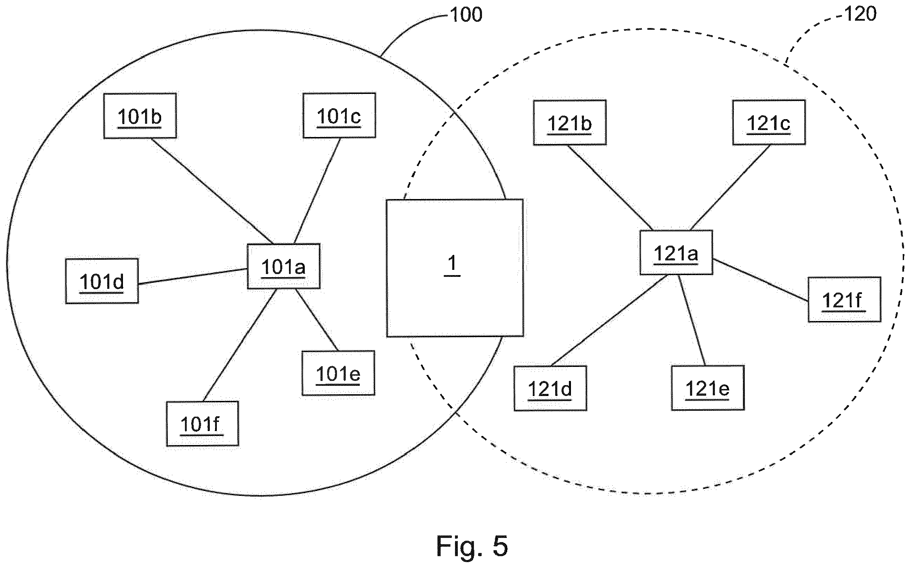

Figur 5 verdeutlicht, wie ein und derselbe Bandwächter 1 in zwei Funkkommunikationssysteme 100, 120 eingebunden sein kann. Das System 100 umfasst die Teilnehmer 101a-101f, wobei der Teilnehmer 101a die zentrale Basisstation ist. Analog umfasst das System 120 die Teilnehmer 120a-120f, wobei der Teilnehmer 120a die zentrale Basisstation ist. Der Bandwächter 1 ist in beiden Systemen 100, 120 als zusätzlicher Teilnehmer angemeldet und wird daher automatisch darüber informiert, welche festen Abfolgen 102a-102f von Frequenzen f den jeweiligen Teilnehmern 101a-101f, bzw. 121a-121f, jeweils zugeteilt sind.

### Bezugszeichenliste

- 1, 1a-1d: Bandwächter
- 2: Messmittel
- 3: Speicher für feste Abfolgen 102a-102f zu nutzender Frequenzen f
- 4: Auswerteeinheit des Bandwächters 1, 1a-1d
- 5: Kommunikationseinheit des Bandwächters 1, 1a-1d
- 6: Speicher für zu erwartendes Signal am Ort des Bandwächters 1, 1a-1d
- 8: intelligente Anzeige des Bandwächters 1, 1a-1d
- 9, 9a, 9b: Störer
- 20: Zeit-Frequenz-Darstellung der Frequenznutzung
- 50: separes Kommunikationsnetz
- 21a-21h: unabhängige Empfänger der Messmittel 2
- 91: Frequenznutzung durch Störer 9
- 100: erstes Funkkommunikationssystem
- 101a-101f: Teilnehmer des ersten Funkkommunikationssystems 100
- 102a-102f: den Teilnehmern 101a-101f, 121a-121f zugeteilte feste Abfolgen
- 103: Frequenzband
- 104a-104h: Frequenzen innerhalb des Frequenzbandes 103
- 105a-105h: Teilfrequenzband innerhalb des Frequenzbandes 103
- 106a-106f: Signalstärke bei 1, 1a-1d durch Teilnehmer 101a-101f, 121a-121f
- 110: durch System 100 versorgter Bereich
- 111: Randbereich des Bereichs 110
- 112: Zugang zum Bereich 110
- 120: zweites Funkkommunikationssystem
- 121a-121f: Teilnehmer des zweiten Funkkommunikationssystems 120
- 201: mit festen Abfolgen 102a-102f plausible Frequenznutzung
- 202: zu festen Abfolgen 102a-102f widersprüchliche Frequenznutzung
- 203: von Auswerteeinheit 4 zu ignorierende Frequenznutzung
- 300: verteiltes industrielles Steuerungssystem
- 301: speicherprogrammierbare Steuerung des Systems 300
- 302: vom Steuerungssystem 300 gesteuertes Gerät
- 303: Sicherheitszustand
- f, fₘᵢₙ, fₘₐₓ: Frequenzen
- P: Empfangsleistung
- t: Zeit
- ti: Zeitpunkt der Analyse der Zeit-Frequenz-Darstellung 20

## Patentansprüche

1. Bandwächter (1, 1a-1d) für ein Funkkommunikationssystem (100, 120), in dem jedem Teilnehmer (101a-101f, 121a-121f) eine feste Abfolge (102a-102f) zu benutzender Frequenzen f zugeteilt ist, umfassend Messmittel (2) zur Ermittlung einer Zeit-Frequenz-Darstellung (20) der Nutzung mindestens eines Frequenzbandes (103) des Funkkommunikationssystems (100), **dadurch gekennzeichnet, dass** der Bandwächter (1, 1a-1d) zusätzlich einen Speicher (3) für die festen Abfolgen (102a-102f) sowie eine Auswerteeinheit (4) umfasst, wobei die Auswerteeinheit (4) dazu ausgebildet ist, die Zeit-Frequenz-Darstellung (20) durch einen Vergleich der tatsächlichen Frequenznutzung mit den den einzelnen Teilnehmern (101a-101f, 121a-121f) zugewiesenen festen Abfolgen (102a-102f) in einen mit den festen Abfolgen (102a-102f) plausiblen Anteil (201) und in einen zu den festen Abfolgen (102a-102f) widersprüchlichen Anteil (202) zu zerlegen.

2. Bandwächter (1, 1a-1d) nach Anspruch 1, **dadurch gekennzeichnet, dass** der Bandwächter (1, 1a-1d) eine Kommunikationseinheit (5) aufweist, mit der er als Teilnehmer (101a-101f, 121a-121f) in das Funkkommunikationssystem (100, 120) einbindbar ist.

3. Bandwächter (1, 1a-1d) nach einem der Ansprüche 1 bis 2, **dadurch gekennzeichnet, dass** der Bandwächter (1, 1a-1d) eine Kommunikationseinheit (5) aufweist, die mit einem vom Funkkommunikationssystem (100) verschiedenen drahtlosen oder drahtgebundenen Kommunikationsnetz (50) verbindbar ist.

4. Bandwächter (1, 1a-1d) nach einem der Ansprüche 1 bis 3, **dadurch gekennzeichnet, dass** die Messmittel (2) eine Mehrzahl von simultan arbeitenden Empfängern (21a-21h) umfassen, die zu einem vorgegebenen Zeitpunkt jeweils auf eine feste Frequenz (104a-104h) und/oder auf ein festes Teilfrequenzband (105a-105h) innerhalb des Frequenzbandes (103) sensitiv sind.

5. Bandwächter (1, 1a-1d) nach einem der Ansprüche 1 bis 4, **dadurch gekennzeichnet, dass** ein zusätzlicher Speicher (6) für die am Ort des Bandwächters (1) zu erwartenden Signaleigenschaften der Teilnehmer (101a-101f, 121a-121f) vorgesehen ist und dass die Auswerteeinheit (4) dazu ausgebildet ist, die Signaleigenschaften einer Frequenznutzung, die mit der festen Abfolge (102a-102f) eines Teilnehmers (101a-101f, 121a-121f) plausibel sind, mit den zu erwartenden Signaleigenschaften (106a-106f) des vom Teilnehmer (101a-101f, 121a-121f) empfangenen Signals zu vergleichen.

6. Bandwächter (1, 1a-1d) nach Anspruch 5, **dadurch gekennzeichnet, dass** die Auswerteeinheit (4) dazu ausgebildet ist, eine Abweichung der Signaleigenschaften von den zu erwartenden Signaleigenschaften (106a-106f) als Einbruchsversuch in das Funkkommunikationssystem (100, 120) durch Vorspiegeln der Identität des Teilnehmers (101a-101f, 121a-121f) zu erkennen.

7. Bandwächter (1, 1a-1d) nach einem der Ansprüche 1 bis 6, **dadurch gekennzeichnet, dass** die Auswerteeinheit (4) in einen Lernmodus schaltbar ist, in dem sie aus der Zeit-Frequenz-Darstellung (20) die festen Abfolgen (102a-102f) und/oder die zu erwartenden Signaleigenschaften (106a-106f) ermittelt.

8. Bandwächter (1, 1a-1d) nach einem der Ansprüche 1 bis 7, **dadurch gekennzeichnet, dass** die Messmittel (2) dazu ausgebildet sind, während mindestens einer mindestens einem Teilnehmer (101a-101f, 121a-121f) seitens des Funknetzwerks (100) zugewiesenen Sendepause eine Zeit-Frequenz-Darstellung (20) aufzunehmen.

9. Bandwächter (1, 1a-1d) nach einem der Ansprüche 1 bis 8, **dadurch gekennzeichnet, dass** die Auswerteeinheit (4) dazu ausgebildet ist, eine Frequenznutzung als mit dem IO-Link-Standard, mit einem WLAN-Standard und/oder mit einem Bluetooth-Standard konforme Frequenznutzung zu identifizieren.

10. Funkkommunikationssystem (100, 120), welches einen räumlichen Bereich (110) versorgt, **dadurch gekennzeichnet, dass** mindestens ein Bandwächter (1, 1a-1d) nach einem der Ansprüche 1 bis 9 in einem Randbereich (111) des versorgten Bereichs (110) und/oder an einem Zugang (112) zum versorgten Bereich (110) und/oder nahe einer zentralen Basisstation (101a, 121a) des Funkkommunikationssystems (100, 120) angeordnet ist.

11. Verteiltes industrielles Steuerungssystem (300) mit mindestens einem Funkkommunikationssystem (100, 120), **dadurch gekennzeichnet, dass** das Funkkommunikationssystem (100, 120) mindestens einen Bandwächter (1, 1a-1d) nach einem der Ansprüche 1 bis 9 umfasst, wobei mindestens ein Steuergerät (301) des Steuerungssystems (300) mit dem Bandwächter (1, 1a-1d) gekoppelt und dazu ausgebildet ist, ausgelöst durch die Erkennung durch den Bandwächter (1, 1a-1d) eines zur geplanten Frequenznutzung im Funkkommunikationssystem (100, 120) widersprüchlichen Anteils (202) der Frequenznutzung das Steuerungssystem (300) in einen Sicherheitszustand (303) zu versetzen, in dem die Auswirkung einer Störung des Funkkommunikationssystems (100, 120) vermindert ist.

12. Steuerungssystem (300) nach Anspruch 11, **dadurch gekennzeichnet, dass** in dem Sicherheitszustand (303) die maximal tolerierbare Latenzzeit bei der Funkübertragung im Funkkommunikationssystem (100, 120) erhöht ist.

13. Steuerungssystem (300) nach einem der Ansprüche 11 bis 12, **dadurch gekennzeichnet, dass** in dem Sicherheitszustand (303) eine Arbeitsgeschwindigkeit mindestens eines von dem Steuerungssystem (300) gesteuerten Geräts (302) gegenüber dem Normalbetrieb vermindert ist.

## Claims

1. Band guard (1, 1a-1d) for a radio communication system (100, 120) in which a fixed sequence (102a-102f) of frequencies f to be used is assigned to each participant (101a-101f, 121a-121f), comprising measuring means (2) for determining a time-frequency representation (20) of the usage of at least one frequency band (103) of the radio communication system (100), **characterised in that** the band guard (1, 1a-1d) comprises additionally a storage (3) for the fixed sequences (102a-102f) and an evaluation unit (4), wherein the evaluation unit (4) is configured to break down the time-frequency representation (20) by comparing the actual frequency usage with the fixed sequences (102a-102f) assigned to the individual participants (101a-101f, 121a-121f) into a plausible part (201) having the fixed sequences (101a-101f) and a part (202) contradicting the fixed sequences (102a-102f).

2. Band guard (1, 1a-1d) according to claim 1, **characterised in that** the band guard (1, 1a-1d) has a communication unit (5) with which it can be connected as participant (101a-101f, 121a-121f) into the radio communication system (100, 120).

3. Band guard (1, 1a-1d) according to any of claims 1 to 2, **characterised in that** the band guard (1, 1a-1d) has a communication unit (5) which can be connected with a wireless or wired communication network (50) different from the radio communication system (100).

4. Band guard (1, 1a-1d) according to any of claims 1 to 3, **characterised in that** the measuring means (2) comprise a plurality of simultaneously working receivers (21a-21h) which at a predetermined point in time are sensitive respectively to a fixed frequency (104a-104h) and/or to a fixed partial subband (105a-105h) within the frequency band (103).

5. Band guard (1, 1a-1d) according to any of claims 1 to 4, **characterised in that** an additional storage (6) is provided for the signal characteristics of the participants (101a-101f, 121a-121f) to be expected at the location of the band guard (1) and that the evaluation unit (4) is configured to compare the signal characteristics of a frequency usage which are plausible with the fixed sequence (102a-102f) of a participant (101a-101f, 121a-121f) with the signal characteristics (106a-106f) to be expected of the signal received from the participant (101a-101f, 121a-121f).

6. Band guard (1, 1a-1d) according to claim 5, **characterised in that** the evaluation unit (4) is configured to recognise a deviation in the signal characteristics from the signal characteristics (106a-106f) to be expected as an attempt to break into the radio communication system (100, 120) by simulating the identity of the participant (101a-101f, 121a-121f).

7. Band guard (1, 1a-1d) according to any of claims 1 to 6, **characterised in that** the evaluation unit (4) can be switched into a learning mode, in which it determines from the time-frequency representation (20) the fixed sequences (102a-102f) and/or the signal characteristics (106a-106f) to be expected.

8. Band guard (1, 1a-1d) according to any of claims 1 to 7, **characterised in that** the measuring means (2) are configured to capture a time-frequency representation (20) during at least one transmission pause allocated to at least one participant (101a-101f, 121a-121f) on the part of the radio network (100).

9. Band guard (1, 1a-1d) according to any of claims 1 to 8, **characterised in that** the evaluation unit (4) is configured to identify a frequency usage as frequency usage conforming with the IO-Link standard, with a WLAN standard and/or with a Bluetooth standard.

10. Radio communication system (100, 120), which supplies a spatial area (110), **characterised in that** at least one band guard (1, 1a-1d) according to any of claims 1 to 9 is arranged in an edge portion (111) of the supplied area (110) and/or at a gateway (112) to the supplied area (110) and/or near to a central base station (101a, 121a) of the radio communication system (100, 120).

11. Distributed industrial control system (300) having at least one radio communication system (100, 120), **characterised in that** the radio communication system (100, 120) comprises at least one band guard (1, 1a-1d) according to any of claims 1 to 9, wherein at least one control device (301) of the control system (300) is coupled with the band guard (1, 1a-1d) and configured, triggered by the recognition on the part of the band guard (1, 1a-1d) of a part (202) of the frequency usage contradicting the planned frequency usage in the radio communication system (100, 120), to put the control system (300) into a safe state (303) in which the effect of an disruption of the radio communication system (100, 120) is reduced.

12. Control system (300) according to claim 11, **characterised in that** in the safe state (303) the maximum tolerable latency time in the case of the radio transmission in the radio communication system (100, 120) is increased.

13. Control system (300) according to any of claims 11 to 12, **characterised in that** in the safe state (303) a working speed of at least one device (302) controlled by the control system (300) is reduced in relation to the normal operation.

## Revendications

1. Dispositif de surveillance de bande (1, 1a-1d) pour un système de radiocommunication (100, 120), dans lequel une séquence fixe (102a-102f) de fréquences à utiliser f est attribuée à chaque participant (101a-101f, 121a-121f), comprenant des moyens de mesure (2) pour la détermination d'une représentation temps-fréquence (20) de l'utilisation d'au moins une bande de fréquence (103) du système de radiocommunication (100), **caractérisé en ce que** le dispositif de surveillance de bande (1, 1a-1d) comprend en outre une mémoire (3) pour les séquences fixes (102a-102f) ainsi qu'une unité d'évaluation (4), dans lequel l'unité d'évaluation (4) est réalisée pour décomposer la représentation temps-fréquence (20) par une comparaison de l'utilisation de fréquence réelle avec les séquences fixes (102a-102f) affectées aux différents participants (101a-101f, 121a-121f) en une part plausible (201) avec les séquences fixes (102a-102f) et en une part contradictoire (202) par rapport aux séquences fixes (102a-102f).

2. Dispositif de surveillance de bande (1, 1a-1d) selon la revendication 1, **caractérisé en ce que** le dispositif de surveillance de bande (1, 1a-1d) présente une unité de communication (5), avec laquelle il peut être intégré en tant que participant (101a-101f, 121a-121f) dans le système de radiocommunication (100, 120).

3. Dispositif de surveillance de bande (1, 1a-1d) selon l'une quelconque des revendications 1 et 2, **caractérisé en ce que** le dispositif de surveillance de bande (1, 1a-1d) présente une unité de communication (5), qui peut être reliée à un réseau de communication (50) sans fil ou relié par fil différent du système de radiocommunication (100).

4. Dispositif de surveillance de bande (1, 1a-1d) selon l'une quelconque des revendications 1 à 3, **caractérisé en ce que** les moyens de mesure (2) comprennent une pluralité de récepteurs (21a-21h) fonctionnant simultanément, qui sont sensibles à un moment prédéfini respectivement à une fréquence fixe (104a-104h) et/ou à une bande de fréquence partielle fixe (105a-105h) à l'intérieur de la bande de fréquence (103).

5. Dispositif de surveillance de bande (1, 1a-1d) selon l'une quelconque des revendications 1 à 4, **caractérisé en ce qu'**une mémoire supplémentaire (6) est prévue pour les propriétés de signal à attendre à l'endroit du dispositif de surveillance de bande (1) des participants (101a-101f, 121a-121f) et que l'unité d'évaluation (4) est réalisée pour comparer les propriétés de signal d'une utilisation de fréquence, qui sont plausibles avec la séquence fixe (102a-102f) d'un participant (101a-101f, 121a-121f), avec les propriétés de signal à attendre (106a-106f) du signal reçu par le participant (101a-101f, 121a-121f).

6. Dispositif de surveillance de bande (1, 1a-1d) selon la revendication 5, **caractérisé en ce que** l'unité d'évaluation (4) est réalisée pour détecter un écart des propriétés de signal par rapport aux propriétés de signal à attendre (106a-106f) en tant que tentative d'intrusion dans le système de radiocommunication (100, 120) par miroitement de l'identité du participant (101a-101f, 121a-121f).

7. Dispositif de surveillance de bande (1, 1a-1d) selon l'une quelconque des revendications 1 à 6, **caractérisé en ce que** l'unité d'évaluation (4) est commutable dans un mode d'apprentissage, dans lequel elle détermine à partir de la représentation temps-fréquence (20) les séquences fixes (102a-102f) et/ou les propriétés de signal à attendre (106a-106f).

8. Dispositif de surveillance de bande (1, 1a-1d) selon l'une quelconque des revendications 1 à 7, **caractérisé en ce que** les moyens de mesure (2) sont réalisés pour recevoir une représentation temps-fréquence (20) pendant au moins une pause d'émission affectée par le réseau radio (100) à au moins un participant (101a-101f, 121a-121f).

9. Dispositif de surveillance de bande (1, 1a-1d) selon l'une quelconque des revendications 1 à 8, **caractérisé en ce que** l'unité d'évaluation (4) est réalisée pour identifier une utilisation de fréquence en tant qu'utilisation de fréquence conforme au standard IO-Link, à un standard Wi-Fi et/ou à un standard Bluetooth.

10. Système de radiocommunication (100, 120), lequel alimente une zone spatiale (110), **caractérisé en ce qu'**au moins un dispositif de surveillance de bande (1, 1a-1d) selon l'une quelconque des revendications 1 à 9 est agencé dans une zone de bord (111) de la zone alimentée (110) et/ou au niveau d'un accès (112) à la zone alimentée (110) et/ou près d'une station de base centrale (101a, 121a) du système de radiocommunication (100, 120).

11. Système de commande industriel distribué (300) avec au moins un système de radiocommunication (100, 120), **caractérisé en ce que** le système de radiocommunication (100, 120) comprend au moins un dispositif de surveillance de bande (1, 1a-1d) selon l'une quelconque des revendications 1 à 9, dans lequel au moins un appareil de commande (301) du système de commande (300) est couplé avec le dispositif de surveillance de bande (1, 1a-1d) et est réalisé pour mettre le système de commande (300) dans un état de sécurité (303) déclenché par la détection par le dispositif de surveillance de bande (1, 1a-1d) d'une part contradictoire (202) par rapport à l'utilisation de fréquence planifiée dans le système de radiocommunication (100, 120) de l'utilisation de fréquence, dans lequel l'incidence d'un dérangement du système de radiocommunication (100, 120) est réduite.

12. Système de commande (300) selon la revendication 11, **caractérisé en ce que** le temps de latence tolérable au maximum pour la radiotransmission dans le système de radiocommunication (100, 120) est augmenté à l'état de sécurité (303).

13. Système de commande (300) selon l'une quelconque des revendications 11 et 12, **caractérisé en ce qu'**une vitesse de travail d'au moins un appareil (302) commandé par le système de commande (300) est réduite à l'état de sécurité (303) par rapport au fonctionnement normal.
